# EUROPEAN PATENT APPLICATION

(11) **EP 4 819 418 A1**
(43) Date of publication of application: **07.10.2026**
(21) Application number: 25168401.5
(22) Date of filing: 03.04.2025
(51) Int. Cl.: H01S 3/1118, G02F 1/35, G02B 5/08

(54) **SATURABLE ABSORBER MIRROR AND METHOD FOR FABRICATING A SATURABLE ABSORBER MIRROR**

(71) Applicant: Fraunhofer-Gesellschaft zur Förderung der angewandten Forschung e.V., 80686 München (DE)
(72) Inventor: KOHLHAAS, Dr. Robert, 12163 Berlin (DE); DOHMS, Alexander, 10245 Berlin (DE); KEYVANINIA, Dr. Shahram, 12107 Berlin (DE); BREUER, Dr. Steffen, 14469 Potsdam (DE)
(74) Representative: Maikowski & Ninnemann Patentanwälte Partnerschaft mbB

(57) **Abstract**

The invention relates to a saturable absorber mirror, comprising a carrier (1); a dielectric Bragg mirror (2) arranged on the carrier (1); and at least one bulk absorber layer (3) comprising or consisting of a semiconductor material, wherein the optical absorption characteristics of the least one bulk absorber layer (3) are determined by the optical bulk absorption characteristics of the semiconductor material. The invention also relates to a method for fabricating a saturable absorber mirror.

## Description

The invention relates to a saturable absorber mirror according to claim 1 and a method for fabricating a saturable absorber mirror according to claim 14.

Semiconductor saturable absorber mirrors (*SESAM*) or, more generally, saturable absorber mirrors (*SAM*) are used for passive mode locking purposes and thus for generating ultrashort pulses, for example, in femtosecond lasers. Compared to competing technologies such as Kerr lenses or additive pulse mode coupling, SAMs may offer a number of advantages such as strong scaling potential, high cost efficiency, "plug & play" installation in the laser and uncomplicated laser start-up procedures. Therefore, SAMs often are an integral part of commercial laser systems. For example, US 2016/0342067 A1 discloses a saturable absorber mirror having a quantum well absorber layer. Quantum well absorbers, however, may have comparatively narrow absorption bands, which may limit their application range. A high degree of growth and post-growth control may be required to precisely match the absorption band of the quantum well absorber with the central wavelength of the laser. Furthermore, the absorption coefficient of quantum well absorbers is only slightly scalable. This may limit the adjustability of nonlinear SAM absorption, which provides the central feedback for laser mode coupling. In addition, quantum well absorbers may show a low damage threshold so that the SAM lifetime may be significantly reduced at high pulse energies.

It is an object of the invention to provide a saturable absorber mirror permitting easier adaptation to the laser and having a higher damage threshold. It is also an object of the invention to provide a method for fabricating such a saturable absorber mirror.

According to the invention, a saturable absorber mirror is provided, comprising:
- a carrier;
- a dielectric Bragg mirror arranged at the carrier; and
- at least one bulk absorber layer comprising or consisting of a semiconductor material, wherein the optical absorption characteristics of the least one bulk absorber layer are determined by the optical bulk absorption characteristics of the semiconductor material.

The at least one bulk absorber layer may allow the absorption of the saturable absorber mirror to be set continuously by varying the absorber layer thickness. This may constitute a new degree of freedom for setting the modulation depth when designing the saturable absorber mirror. Further, the absorption characteristics of the at least one bulk absorber layer are not determined by quantum well effects and therefore may comprise a broadband absorption spectrum. Moreover, in contrast to quantum well absorbers, the saturable absorber mirror according to the invention does not require strain-compensating layers. The presence of strain-compensating layers in an anti-node of the standing intensity wave in the SAM, where (typically) the quantum well absorber is placed, has been shown to reduce the damage threshold. However, the saturable absorber mirror according to the invention may include spacers, i.e. spacer layers in the node of the standing intensity wave, separating the at least one bulk absorber layer from other layers Further, using a bulk absorber layer may contribute to realizing a fabrication process having high reproducibility and yield.

The dielectric Bragg mirror may be arranged between the carrier and the at least one bulk absorber layer, wherein the dielectric Bragg mirror may be arranged directly on the at least one bulk absorber layer. For example, the dielectric Bragg mirror may be formed on the at least one bulk absorber layer by means of a sputtering process. However, a direct arrangement of the dielectric Bragg mirror on the at least one bulk absorber layer is only optional. The saturable absorber mirror may comprise at least one material layer located between the dielectric Bragg mirror and the least one bulk absorber layer. For example, at least one non-metallic spacer layer (e.g., at least one semiconductor layer) is arranged between the dielectric Bragg mirror and the least one bulk absorber layer. Further, at least one non-metallic spacer layer may be arranged between the carrier and the least one bulk absorber layer. At least one additional spacer layer may be arranged on an opposite side of the at least one bulk absorber layer, i.e., on a side of the at least one bulk absorber layer that faces away from the dielectric Bragg mirror.

Moreover, the dielectric Bragg mirror may be arranged (e.g., bonded) directly at (e.g., on) the carrier or may be bonded to the carrier by means of at least one bonding layer (adhesive bonding). The bonding layer may comprise a polymer (e.g., BCB). As another example, micro transfer printing may be used to arrange (bond) the Bragg mirror to the carrier. The carrier may comprise or consist of at least one of glass, metal or a semiconductor material. In particular, the dielectric Bragg mirror may be arranged adjacent (e.g., directly adjacent) the carrier and adjacent (e.g., directly adjacent) the bulk absorber layer. For example, the dielectric Bragg mirror is arranged directly on thebulk absorber layer. In particular, there may be no reflective metal layer between the dielectric Bragg mirror and the carrier and/or between the dielectric Bragg mirror and the bulk absorber layer. In other words, the saturable absorber mirror according to the invention may not comprise a hybrid mirror consisting of a dielectric Bragg mirror and a reflective metal layer.

According to another embodiment of the invention, the semiconductor material of the at least one absorber layer may be a III-V material such as GaAs, InGaAs, InGaAlAs, InGaAsP and/or InGaAsSb. The absorption characteristics of the at least one absorber layer (e.g., its absorption band edge) may be tuned by varying the ratio of constituents of the III-V materials. The at least one bulk absorber layer may have a thickness of at least 15 nm, at least 20 nm or at least 30 nm (the thickness measured perpendicular to the absorber layer). The at least one absorber layer may be epitaxially grown on a corresponding semiconductor substrate, which later may be removed as will be set out further below.

Moreover, the dielectric Bragg mirror may comprise or consist of a plurality of dielectric layers. For example, the dielectric Bragg mirror comprises a plurality of first and second layers of a first and a second material, respectively, the second material being different from the first material. The first layers are arranged alternating with the second layers. For example, the first material is silicon oxide or silicon nitride and the second material is titanium oxide. Of course, the invention is not limited to a specific configuration of the dielectric Bragg mirror. For example, the central wavelength of the dielectric Bragg mirror may be individually adjusted via the thicknesses of the layers of the first and second set of layers. This may allow the saturable absorber mirror to be precisely matched to the central wavelength of a laser. Moreover, comparatively high refractive index contrasts (Δn > 0.5) between the first and the second layers may be available, permitting the realization of highly reflective Bragg mirrors with e.g., > 99% reflectivity and a broadband stopband with e.g., FWHM > 400 nm. Further, only a few Bragg pairs, i.e. pairs of one of the first layers and one of the second layers, may be required. For example, the dielectric Bragg mirror does not comprise more than 10 pairs of a first and a second layer.

Further, the at least one bulk absorber layer may comprise a dopant material, e.g., a metal or transition metal (such as Fe or Rh). The relaxation time of the least one bulk absorber layer may be predetermined by choosing the concentration of the dopant material. High dopant concentrations (e.g., at least 1 x 10¹⁷ cm⁻³ , at least 1 x 10¹⁸ cm⁻³ or at least 1 x 10¹⁹ cm⁻³) may be used for very short relaxation times in the picosecond or sub-picosecond range. The dopant material may be added during the generation of the least one bulk absorber layer (e.g., during epitaxially growth). The metal or transition metal doping may allow the absorber decay rate to be set precisely, pre-determined and shorter, e.g., as short as 0.2 ps. Further, targeted and locally limited doping of the bulk absorber layer may be performed at high growth temperatures when growing the bulk absorber layer, which may lead to a significant defect reduction compared to low temperature growth and ion implantation, not only in the absorber layer but in the entire epitaxially grown layer stack (which may include spacer layers or other layers in addition to the bulk absorption layer). The reduced non-saturable losses may increase the efficiency of the saturable absorber mirror.

According to another embodiment of the invention, the saturable absorber mirror may comprise at least one (e.g., protective) dielectric layer arranged on a side of the at least one bulk absorber layer that faces away from the dielectric Bragg mirror. For example, the dielectric layer is arranged (e.g., directly) on the at least one bulk absorber layer. The dielectric layer, e.g., a silicon nitride or silicon oxide layer, may be generated by a sputtering process.

This disclosure also relates to a laser (e.g., for generating short light pulses) comprising the saturable absorber mirror according to the invention. The laser is configured in such a way that the saturable absorber mirror receives and reflects light generated by an active medium of the laser. Generally, the saturable absorber mirror according to the invention may be used in laser technology to generate ultrashort light pulses in the femto- or picosecond range. For example, the saturable absorber mirror may be employed in solid-state lasers, fiber lasers and semiconductor lasers, which are widely used in research, materials processing, medical technology, microscopy and communications technology.

The invention also relates to a method for fabricating a saturable absorber mirror, in particular a saturable absorber mirror as described above, comprising:
- arranging at least one bulk absorber layer on a substrate, the at least one bulk absorber layer comprising or consisting of a semiconductor material;
- arranging a dielectric Bragg mirror on the at least one bulk absorber layer; and
- arranging a carrier on a side of the dielectric Bragg mirror that faces away from the substrate.

The substrate may be a semiconductor substrate, e.g., a III-V semiconductor substrate such as GaAs, InP or GaSb, corresponding to the semiconductor material of the at least one bulk absorber layer (which may comprise a III-V material such as InGaAlAs, InGaAsP and/or InGaAsSb as set forth above). Arranging the at least one bulk absorber layer on the substrate may comprise depositing the bulk absorber layer on the substrate, e.g., by epitaxially growing the bulk absorber layer on the substrate.

The carrier is the carrier described above in conjunction with the saturable absorber mirror and may comprise glass, metal or a semiconductor. Accordingly, arranging the carrier on the side of the dielectric Bragg mirror that faces away from the substrate may comprise bonding the carrier to the dielectric Bragg mirror, e.g., by means of a polymer layer as described above, so that the stack comprising at least the dielectric Bragg mirror, the at least one bulk absorber layer and the substrate is bonded to the carrier.

The substrate may be removed after arranging the carrier on the dielectric Bragg mirror. The removal of the substrate may be carried out by mechanical grinding or polishing or wet chemical etching. One or multiple selective etch stop layers may be arranged between the substrate and the at least one bulk absorber layer. Further, spacer layers may be arranged on opposite sides of the at least one bulk absorber layer as already set out above. The etch stop layer may be arranged between the substrate and the spacer layer.

Embodiments of the invention will be described hereinafter with reference to the drawings, which show:
- Fig. 1: a saturable absorber mirror according to an embodiment of the invention; and
- Fig. 2A - 2E: processing steps of a method for fabricating a saturable absorber mirror according to an embodiment of the invention.

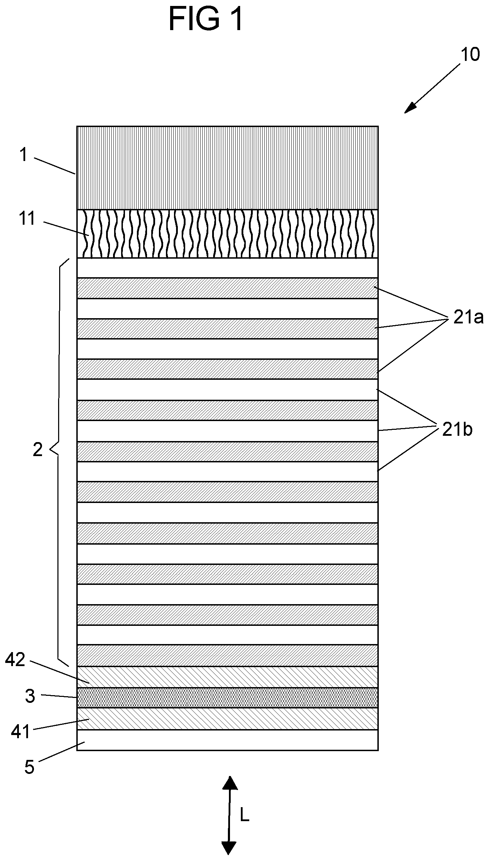

The saturable absorber mirror 10 according to an embodiment of the invention depicted in Fig. 1 comprises a carrier 1 at which a dielectric Bragg mirror 2 is arranged. More particularly, the Bragg mirror 2 is bonded to the carrier 1, for example via direct bonding or adhesive bonding with a polymer layer 11 (e.g., a BCB layer). For example, micro transfer printing may be used. The carrier 1 may comprise glass, metal or a semiconductor material. The dielectric Bragg mirror 2 includes a first set of dielectric layers 21a consisting of a first material and a second set of dielectric layers 21b consisting of second dielectric material. The dielectric layers 21a are arranged alternating with the dielectric layers 21b. Further, a semiconductor bulk absorber layer 3 is provided on a side of the dielectric Bragg mirror 2 facing away from the carrier 1. The saturable absorber mirror 10 may form part of a laser (not shown), wherein light L generated by an active medium of the laser propagates through the bulk absorber layer 3 and is reflected at the dielectric Bragg mirror 2.

Further, spacer layers 41, 42are arranged on opposite sides of the bulk absorber layer 3. At least one protective dielectric layer 5 is arranged adjacent the lower spacer layer 41, i.e., the (optional) protective dielectric layer 5 is located on a side of the bulk absorber layer 3 that faces away from the dielectric mirror 2. The protective dielectric layer 5 may comprise a plurality of sub-layers. The protective dielectric layer 5 may comprise silicon nitride or oxide. It is noted that the spacer layers 41, 42 are not configured to act as barriers of a quantum well. The optical absorption characteristics of the bulk absorber layer 3 are determined only by the optical bulk absorption characteristics of the semiconductor material of the bulk absorber layer 3. Although only one bulk absorber layer 3 is shown, more than one absorber layers may be provided. Further, more than one spacer layer may be present on each side of the bulk absorber layer 3 and/or more than one protective dielectric layer. However, it is also possible that no spacer layer is provided or a spacer layer is arranged on one side of the bulk absorber layer 3, only. Further, as already set forth above, the bulk absorber layer 3 may comprise III-V semiconductor material such as GaAs, InGaAs, InGaAlAs, InGaAsP and/or InGaAsSb. The spacer layers 41, 42 may also comprise a corresponding III-V semiconductor material.

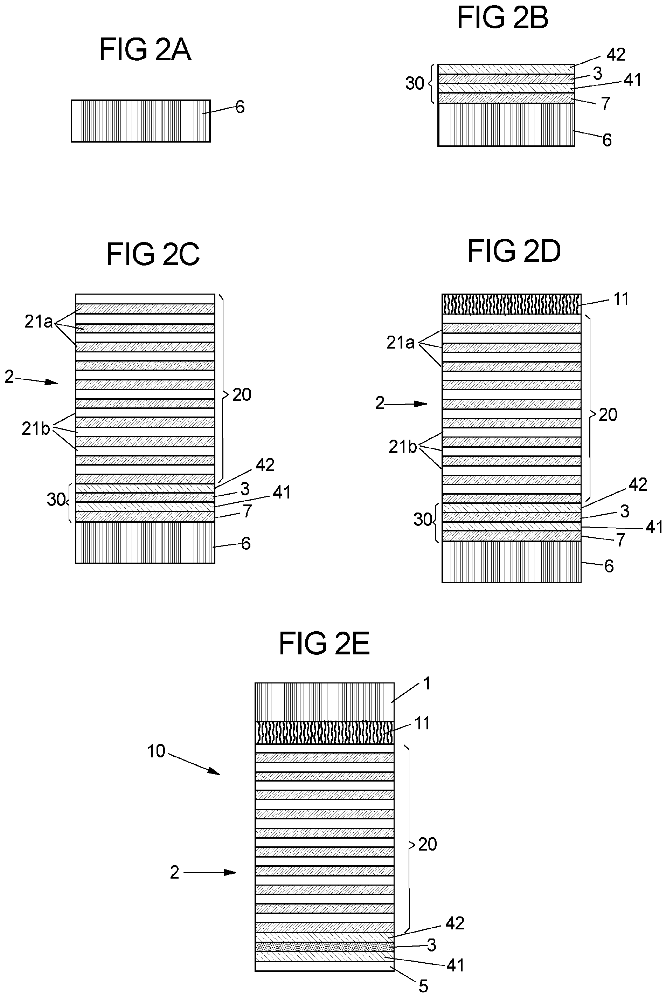

Fig. 2A-D illustrate a method for fabricating the SAM structure depicted in Fig. 1. Initially, a (native) substrate 6 of a III-V semiconductor material such as GaAs, InP or GaSb is provided (Fig. 2A). A layer stack 30 is epitaxially grown on the substrate 6 as shown in Fig. 2B. The layer stack 30 comprises at least one (optional) etch stop layer 7, which may be directly grown on the substrate 6 and also formed from a III-V semiconductor material, the first spacer layer 41 arranged on the etch stop layer 7, the bulk absorber layer 3 arranged on the first spacer layer 41 and the second spacer layer 42 arranged on the bulk absorber layer 3. The bulk absorber layer 3 may be grown to have a thickness of at least 15 nm. As already set forth above, the bulk absorber layer 3 is formed in such a way that its optical absorption properties are determined by the optical bulk absorption characteristics of the semiconductor material it consists of. During the growth of the bulk absorber layer 3 a dopant may added as set out above. For example, a metal or a transition metal is incorporated into the bulk absorber layer 3 during the growth process.

In a subsequent step (Fig. 2C), a layer stack 20 forming the dielectric Bragg mirror 2 is formed on layer stack 30, e.g., by means of a sputtering process. The layer stack 20 comprises the dielectric layers 21a of a first dielectric material (such as silicon oxide or silicon nitride) deposited alternating with the dielectric layers 21b of a second dielectric material, which is different from the first dielectric material. For example, the second dielectric material comprises or consists of titanium oxide.

Further, the polymer layer 11 is arranged on layer stack 20 or carrier 1(Fig. 2D) and the carrier 1 is bonded to the structure consisting of the substrate 6 and the layer stacks 20 and 30 via the polymer layer 11 (Fig. 2E). Alternatively, direct bonding may be used so that the polymer layer 11 is omitted. After bonding the carrier 1 to the layer stacks 20, 30 the substrate 6 is removed, e.g., by mechanical grinding or polishing or wet chemical etching. In particular in case of mechanical grinding or polishing, the at least one etch stop layer 7 may be omitted. During the removal of the substrate 6 also the etch stop layer 7 may be removed. However, an additional processing step may be required to remove the etch stop layer 7. Finally, after the removal of the substrate 6 (and optionally after the removal of the etch stop layer 7) the protective dielectric layer 5, which may be a silicon nitride or silicon oxide layer (or any other dielectric material, such as titanium oxide etc), is deposited on an uncovered (lower) surface of the first spacer layer 41 or bulk absorber 3, e.g., by a sputtering process. The protective layer 5, however, is only optional. Fig. 2E shows the resulting structure, i.e., the saturable absorber mirror 10, after bonding the carrier 1 to the layer stack 20 forming the dielectric Bragg mirror 2 and removing the substrate 6 and the etch stop layer 7. The carrier 1 and/or the protective layer 5 may form outer surfaces of the saturable absorber mirror 10.

## Claims

1. A saturable absorber mirror, comprising:
- a carrier (1);
- a dielectric Bragg mirror (2) arranged at the carrier (1); and
- at least one bulk absorber layer (3) comprising or consisting of a semiconductor material, wherein the optical absorption characteristics of the least one bulk absorber layer (3) are determined by the optical bulk absorption characteristics of the semiconductor material.

2. The saturable absorber mirror of claim 1, wherein the dielectric Bragg mirror (2) is arranged between the carrier (1) and the at least one bulk absorber layer (3).

3. The saturable absorber mirror of claim 1 or 2, wherein the dielectric Bragg mirror (2) is arranged directly on the at least one bulk absorber layer (3).

4. The saturable absorber mirror of claim 1 or 2, further comprising at least one non-metallic spacer layer (42) arranged between the dielectric Bragg mirror (2) and the least one bulk absorber layer (3) and/or comprising at least one non-metallic spacer layer (41) arranged between the carrier (6) and the least one bulk absorber layer (3).

5. The saturable absorber mirror of any of the preceding claims, wherein the dielectric Bragg mirror (2) is arranged directly on the carrier (1) or is bonded to the carrier (1) by means of at least one bonding layer (11).

6. The saturable absorber mirror of any of the preceding claims, wherein the carrier (1) comprise or consists of at least one of glass, metal or a semiconductor material.

7. The saturable absorber mirror of any of the preceding claims, wherein the semiconductor material is a III-V material.

8. The saturable absorber mirror of claim 7, wherein the semiconductor material is GaAs, InGaAs, InGaAlAs, InGaAsP and/or InGaAsSb.

9. The saturable absorber mirror of any of the preceding claims, wherein the at least one bulk absorber layer (3) has a thickness of at least 15 nm, at least 20 nm or at least 30 nm.

10. The saturable absorber mirror of any of the preceding claims, wherein the dielectric Bragg mirror (2) comprises or consists of a plurality of dielectric layers (21a, 21b).

11. The saturable absorber mirror of any of the preceding claims, wherein at least one bulk absorber layer (3) comprises a dopant material.

12. The saturable absorber mirror of claim 11, wherein the dopant material comprises or consists of a metal or a transition metal.

13. The saturable absorber mirror of any of the preceding claims, further comprising at least one dielectric layer (5) arranged on a side of the at least one bulk absorber layer (3) that faces away from the dielectric Bragg mirror (2).

14. A method for fabricating a saturable absorber mirror, in particular a saturable absorber mirror as claimed in any of the preceding claims, comprising:
- arranging at least one bulk absorber layer (3) on a substrate (6), the at least one bulk absorber layer (3) comprising or consisting of a semiconductor material;
- arranging a dielectric Bragg mirror (2) on the at least one bulk absorber layer (3); and
- arranging a carrier (1) on a side of the dielectric Bragg mirror (2) that faces away from the substrate (6).

15. The method of claim 14, further comprising removing the substrate (6) after arranging the carrier (1) on the side of the dielectric Bragg mirror (2) that faces away from the substrate (6).
